# EUROPEAN PATENT APPLICATION

(11) **EP 2 309 350 A1**
(43) Date of publication of application: **13.04.2011**
(21) Application number: 10175493.5
(22) Date of filing: 06.09.2010
(51) Int. Cl.: G04D 7/00, G01M 3/22, G01M 3/32

(54) **Apparatus for performing tightness tests for assembled articles**

(30) Priority: 12.10.2009 IT MI20091736
(71) Applicant: ESA Service S.R.L., 24047 Treviglio, BG (IT)
(72) Inventor: Noci, Egidio, 24043, Vidalengo Di Caravaggio BG (IT)
(74) Representative: Modiano, Micaela Nadia

(57) **Abstract**

Apparatus for performing tightness tests for assembled or finished watches or delicate articles comprising a lower body (1, 1') and an upper body (2, 2') which can be mutually coupled to define a chamber (10, 10') for accommodating at least one item (11, 11') whose tightness is to be tested; the chamber (10, 10) is delimited hermetically by a lower membrane (20, 20') and by an upper membrane (21, 21') which are connected at least partially to the lower body (1, 1') and to the upper body (2, 2'); connecting means (30, 30') are also provided for connecting the chamber (10, 10') to a pressure variation assembly.

## Description

The present invention refers to an apparatus for performing tightness tests for assembled or finished watches or delicate articles.

In prior Italian patent application No. MI2009A001024 of 10/06/2009 by the same applicant, which is intended included herein as reference, a procedure is disclosed for carrying out tightness tests on assembled or finished watches by using helium which is brought up to pressure around the watch, in such a way as to cause its entry inside the watch in the event of there being tightness defects; subsequently the watch is placed in another chamber where a helium detector is present for detecting any helium that leaks out of the watch if there is a tightness defect; in addition it is also possible to put the watch in a partial vacuum so as to assess its tightness characteristics for use under extreme conditions, such as, for example, at high mountain altitudes.

When carrying out such tests it is necessary to exercise great care in order to avoid causing damage to the watch, especially in the partial vacuum phase, during which components of the watch may be expelled.

The aim of the present invention is to solve the aforementioned problem by providing an apparatus for performing tightness tests for assembled or finished watches that enables the watch to be subjected to testing to always be correctly positioned, without causing any damage.

Within this aim, an object of the invention is to provide an apparatus that makes it possible to rationalise the execution of the tests, by offering the capacity to simply and rapidly execute the positioning of the watch to be tested, with the certainty that it is correctly subjected to the different operative phases.

Another aim of the present invention is to provide an apparatus that, thanks to its distinctive implementation characteristics, is capable of offering the widest guarantees of reliability and safety in use.

A further object of the present invention is to provide an apparatus for performing tightness tests for assembled or finished watches, that can be easily made from elements and materials that are easily sourced on the market and which, moreover, is competitive also from a merely economical viewpoint.

This aim and these and other objects which will become better apparent hereinafter, are achieved by an apparatus for performing tightness tests for assembled or finished watches or delicate articles, according to the invention, **characterized in that** it comprises a lower body and an upper body, which can be mutually coupled to define a chamber for accommodating at least one item whose tightness is to be tested, said chamber being delimited hermetically by a lower membrane and by an upper membrane, which are connected at least partially to said lower body and to said upper body, connecting means being further provided for connecting said chamber to a pressure variation assembly.

Further characteristics and advantages of the present invention will become better apparent from the description of a preferred, but not exclusive, embodiment of an apparatus for performing tightness tests for assembled or finished watches or delicate articles, illustrated by way of a non-limiting example in the accompanying drawings wherein:
- Figure 1 schematically shows in plan view the apparatus for performing tightness tests;
- Figure 2 schematically shows a sectional view taken along line II-II of Figure 1;
- Figure 3 shows a sectional view taken along the line III-III of Figure 1, with the apparatus in the open position;
- Figure 4 shows an enlarged view of a detail of a watch during the pressure test;
- Figure 5 shows the means for connecting the chamber to a pressure variation assembly;
- Figure 6 shows a plan view of the apparatus for checking for the possible entry of helium inside the watch;
- Figure 7 shows a sectional view taken along line VII-VII of Figure 6, with the apparatus in the open position;
- Figure 8 shows a sectional view taken along line VIII-VIII shown in Figure 6.

With reference to the figures, the apparatus for performing tightness tests for assembled or finished watches or delicate articles is constituted, usually, by a first apparatus for putting helium or tracer gas under pressure around a watch and by a second apparatus for checking for any leaks of helium or tracer gas. Obviously it is conceivably possible to use the same apparatus by first performing the injection of helium or tracer gas under pressure and subsequently, after a thorough washing procedure, the test to check for the leakage of helium or tracer gas.

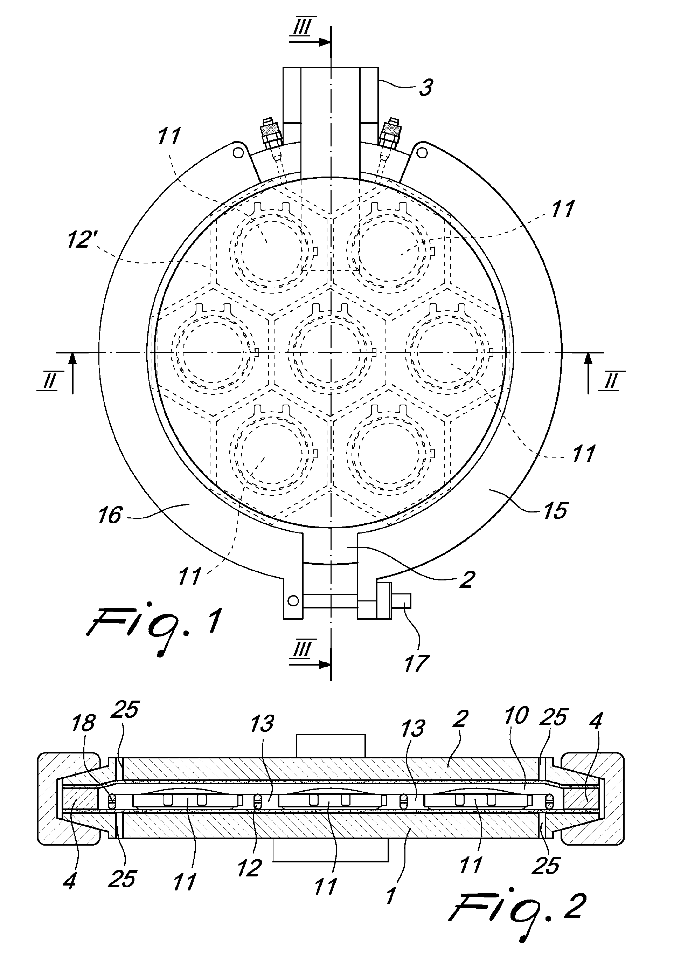

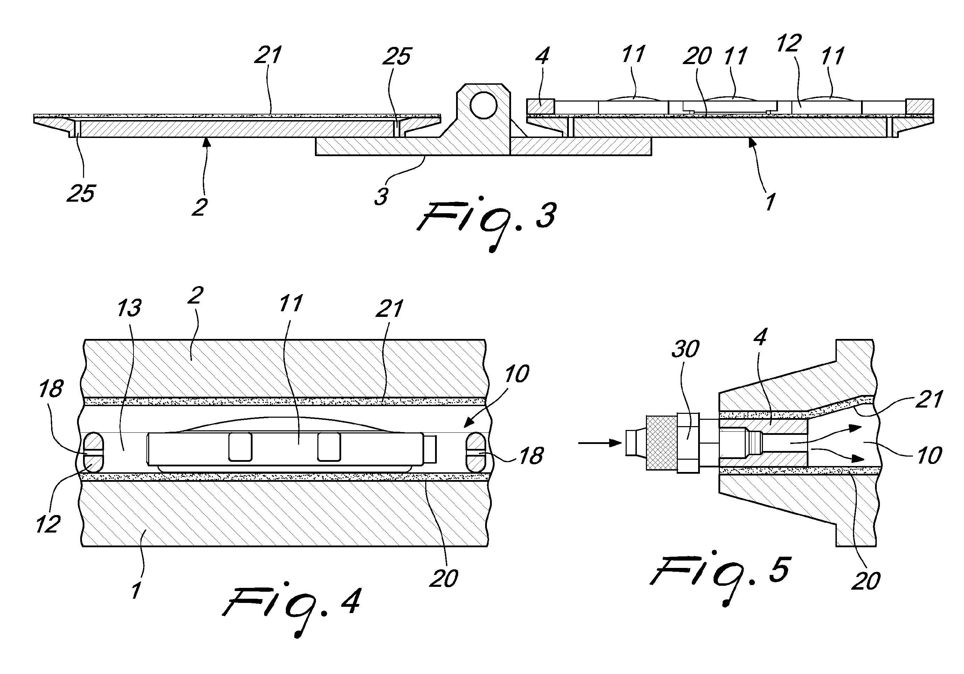

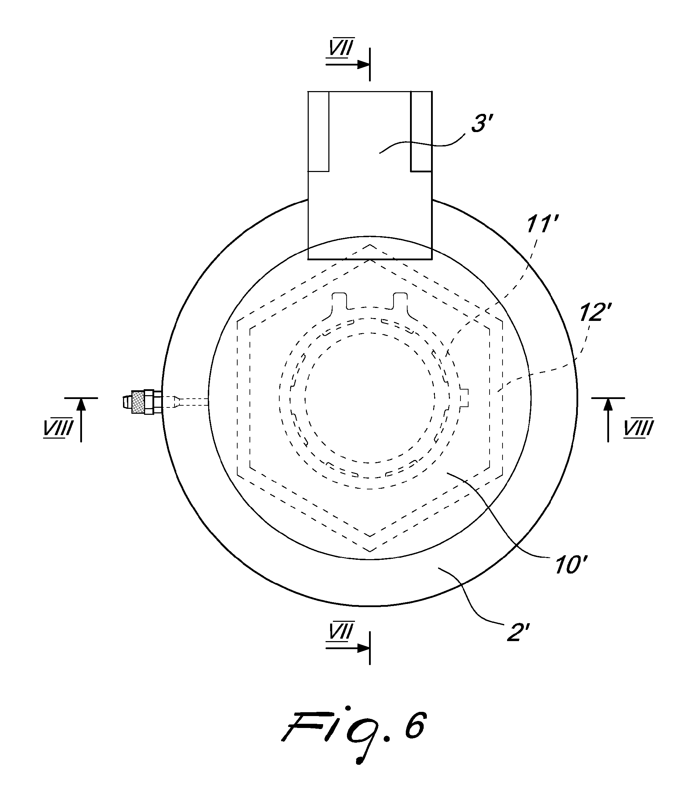

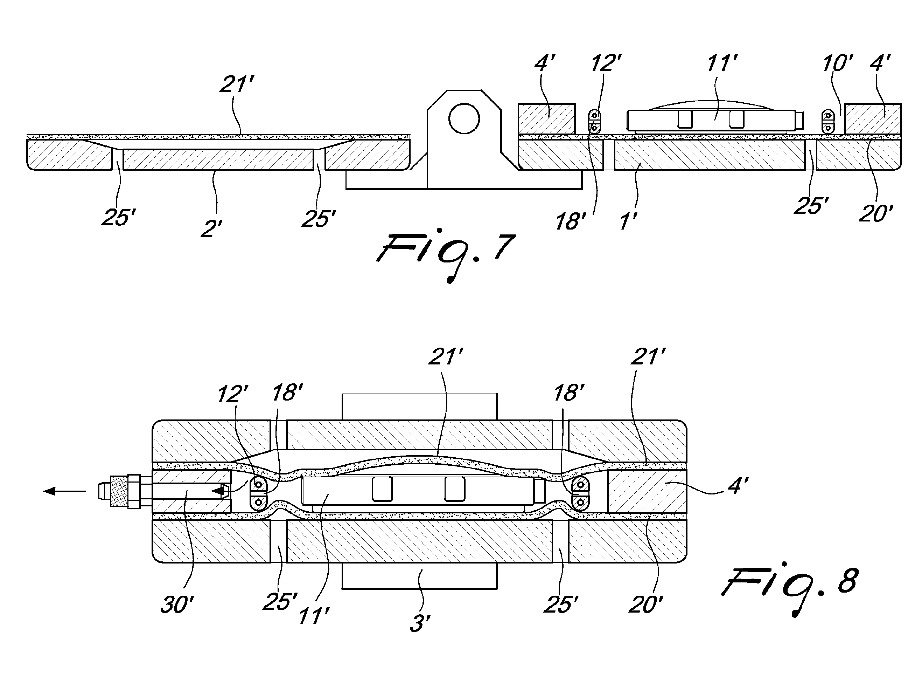

In the specific case of the figures 1 to 5, an apparatus is shown for carrying out the pressure tests, while in figures 6 to 8 an apparatus is shown for checking for leaks of helium.

With reference to figures 1 to 5, a lower body 1 and an upper body 2 are provided, which advantageously are constituted by pans, which can be connected to a hinge body 3 that makes it possible to close the two lower 1 and upper 2 bodies against each other, or connected to each other with equivalent systems that implement the hermetic coupling of the pans.

Between the two bodies a spacer ring 4 is provided which makes it possible, in cooperation with the bodies 1 and 2, to provide a chamber 10 inside which can be placed the objects upon which the tightness tests are to be conducted and which, in the specific example, are constituted by assembled or finished watches, indicated with 11.

Advantageously, even if not necessarily, it is possible to provide a grid 12 that acts as a separation element and which defines a plurality of compartments 13 which make it possible to insert a plurality of watches 11, each inserted in a respective compartment.

The bodies 1 and 2 can be mutually tightened by means of jaws 15 and 16 which are mutually pivoted and can be closed by a bolt 17, and which function as a tightening element and also prevent the parting of the bodies 1 and 2 during the execution of the test that involves the injection of helium or tracer gas under pressure inside the chamber 10.

An important feature of the invention consists in that a lower membrane 20 and an upper membrane 21 are provided, which advantageously are associated with the periphery of the bodies 1 and 2, in such a way as to perform a mutual hermetic tightening of the bodies 1 and 2, and they are assisted in this by the spacer element 4 which is interposed.

The membranes 20 and 21 are made of a soft material and so they cannot cause any damage to the watches.

At the spacer ring 4 connection means are provided that are constituted by an injection valve 30 which can be connected to a pressure variation assembly, which makes it possible to introduce, into the chamber 10, where the grid 12 and the watches 11 or other delicate objects are accomodated, helium or tracer gas under pressure with the desired pressure level, depending on the type of test being conducted.

Advantageously, on the walls of the grid through holes 18 are provided which ensure communication between the several compartments 13, in order to allow the entry of the helium or tracer gas to all the compartments.

Moreover, on the bodies 1 and 2 venting holes 25 are provided which allow the air that remains between the membranes 20 and 21 and the bodies 1 and 2 to escape.

With this arrangement there is the capability to inject helium or another suitable gas under pressure into the chamber 10, thereby affecting a plurality of watches or the like.

Once the injection of helium or other gas under pressure has been performed, a different apparatus can be used which also has a lower body, indicated with 1', and an upper body, indicated with 2 ', which are separated from each other by a spacer 4' and which are joined by a hinge body 3'.

In the specific case it is advisable to provide a chamber 10' in which a single watch or the like is placed, possibly positioned inside a grid 12' in which intake holes 18' are provided which allow the air to escape.

On the lower body I' there is a lower membrane 20', while on the upper body 2' there is an upper membrane 21', which advantageously are provided on their surfaces with a layer of soft material, facing towards the inside of the chamber, which can engage with the surface of the item undergoing testing without causing any damage; the bodies 20' and 21' are provided with venting holes 25'.

At the spacer 4' connection means are provided which advantageously are implemented by an intake valve 30' which is connected to a pressure variation assembly, constituted, in the specific case, by an assembly that is capable of creating a partial vacuum.

With this arrangement, during the creation of the vacuum, the flexible membrane will adhere to the item in the chamber 10' and will prevent its components from being removed from their positions owing to the effect of the vacuum outside and of the atmospheric pressure inside.

Advantageously, checking for leaks of helium or tracer gas that may have penetrated inside the watch is done individually, in order to be certain of which product has not held its seal.

In the partial vacuum test it is not necessary to use the jaws that hold together the lower and upper bodies, because it is the effect of the external atmospheric pressure that keeps them together and sealed against the membranes 20' and 21'.

From the foregoing it can thus be seen that the invention achieves the aim and objects, and in particular attention is drawn to the fact that an apparatus is provided that makes it possible to conduct tightness tests without causing damage to the item being subjected to testing, and without causing troublesome damage to its surface.

The invention, thus conceived, is susceptible of numerous modifications and variations, all of which are within the scope of the appended claims.

Moreover, all the details may be replaced by other technically equivalent elements.

In practice the materials employed, provided they are compatible with the specific use, as well as the dimensions and the contingent shapes, may be any according to requirements.

The disclosures in Italian Patent Application No. MI2009A001736 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for performing tightness tests for assembled or finished watches or delicate articles, **characterized in that** it comprises a lower body (1, 1') and an upper body (2, 2'), which can be mutually coupled to define a chamber (10, 10') for accommodating at least one item (11, 11') whose tightness is to be tested, said chamber (10, 10') being delimited hermetically by a lower membrane (20, 20') and by an upper membrane (21, 21'), which are connected at least partially to said lower body (1, 1') and to said upper body (2, 2'), connecting means (30, 30') being further provided for connecting said chamber (10, 10') to a pressure variation assembly.

2. The apparatus according to claim 1, **characterized in that** said lower body (1, 1') and said upper body (2, 2') are mutually connected to a hinge body (3, 3').

3. The apparatus according to one or more of the preceding claims, **characterized in that** it comprises a spacer ring (4, 4'), which can be interposed between said lower body (1, 1') and said upper body (2, 2') in order to provide said chamber (10, 10').

4. The apparatus according to claim 1, **characterized in that** said lower body (1, 1') and said upper body (2, 2') are constituted by pans.

5. The apparatus according to one or more of the preceding claims, **characterized in that** it comprises jaws (15, 16) for locking said lower body (1, 1') and said upper body (2, 2'), which are mutually pivoted and can be closed by a bolt (17) to contain said lower body (1, 1') and said upper body (2, 2') during the execution of tests with introduction of pressurized helium or tracer gas in said chamber (10, 10').

6. The apparatus according to one or more of the preceding claims, **characterized in that** it comprises, for the execution of pressure tests, a grid 12 which can be accommodated in said chamber (10) and defines a plurality of compartments (13) for accommodating a plurality of items (11) to be subjected to a tightness test.

7. The apparatus according to one or more of the preceding claims, **characterized in that** in order to check for leaks of helium or tracer gas, said lower membrane (20') and said upper membrane (21'), by way of the generated pressure, engage by contact said item (11), said grid (12') defining a single compartment (13') and having at least one through hole (18') for connection to said pressure variation assembly.
